# EUROPÄISCHE PATENTSCHRIFT

(11) **EP 1 534 548 B1**
(45) Veröffentlichungstag und Bekanntmachung des Hinweises auf die Patenterteilung: **25.10.2006**
(21) Anmeldenummer: 03793612.7
(22) Anmeldetag: 27.06.2003
(51) Int. Cl.: B60J 10/00

(54) **DICHTUNGSPROFIL**
SEALING PROFILE
PROFIL D'ETANCHEITE

(30) Priorität: 03.09.2002 DE 20213494 U
(43) Veröffentlichungstag der Anmeldung: 01.06.2005
(73) Patentinhaber: Meteor Gummiwerke K.H. Bädje GmbH & Co. KG, 31167 Bockenem (DE)
(72) Erfinder: RANZAU, Heiko, 31167 Bockenem (DE); KREBS, Helmut, 64720 Michelstadt (DE)
(74) Vertreter: Sobisch, Peter
(86) Internationale Anmeldenummer: PCT/EP2003/006809
(87) Internationale Veröffentlichungsnummer: WO 2004/022368

(56) Entgegenhaltungen:
- EP-A- 0 822 052
- EP-A- 0 836 962

## Beschreibung

Die Erfindung bezieht sich auf ein Dichtungsprofil entsprechend dem, in der EP 0 836 962 A offenbarten Oberbegriff des Anspruchs 1.

Dichtungsprofile sind in mannigfacher Form bekannt und weisen eine entweder als Voll- oder als Schlauchprofil ausgebildete Form auf, wobei die Querschnittsgestalt und/oder der Werkstoff mit der Maßgabe gewählt sind, dass eine gute Anpassungsfähigkeit an Unebenheiten sowie Maßungenauigkeiten des abzudichtenden Spaltes und ein ausreichendes Rückstellvermögen sichergestellt sind.

Das Dichtungsprofil steht unter elastischer Spannung sobald dieses seine Dichtungsfunktion erfüllt, in welcher es gegen die einander gegenüberliegenden, den abzudichtenden Spalt begrenzenden Berandungen gepresst wird. Diese Anpresskraft im Bereich der Berandungen bzw. Dichtflächen soll im Zeitablauf unter den jeweiligen Betriebsbedingungen gleichförmig anstehen, so dass das Dichtungsprofil bei der Überführung in einen inaktiven entspannten Zustand unter Umsetzung der vorab gespeicherten elastischen Energie zu seiner ursprünglichen Gestalt zurück verformt wird.

Weitere wesentliche Eigenschaften für ein Dichtungsprofil bestehen in Oberflächeneigenschaften, welche insbesondere die Eignung zur Verbindung mit anderen Werkstoffen betreffen, die beispielsweise bei Kraftfahrzeugdichtungsprofilen von Bedeutung sind. Schließlich muss das Dichtungsprofil aufgrund der gewählten Werkstoffe rationell herstellbar sein, und seine, für die Erfüllung der Dichtungsfunktion wesentlichen Eigenschaften in einem Temperaturintervall von wenigstens - 40° C bis ca. + 110° C nahezu unverändert beibehalten.

Mit den bisher bekannten Dichtungsprofilen werden die obigen Anforderungen insbesondere bei schlauchartigen Profilen nur teilweise erreicht.

Aus der EP 0 836 962 A1 ist ein vergleichbares schlauchartiges, zur Verwendung bei Kraftfahrzeugtüren bestimmtes Dichtungsprofil bekannt, welches aus einem inneren, einen Hohlraum umschließenden, aus einem offenzellig geschäumten thermoplastischen Werkstoff geringer Dichte bestehenden Profil besteht, welches außenseitig von einem aus einem geschlossenzellig geschäumten thermoplastischen Profil höherer Dichte umgeben ist. Ein Seitenabschnitt des äußeren Profils dient zur Befestigung an Strukturteilen beispielsweise einer Kraftfahrzeugtür. Während das äußere Profil der Bereitstellung von Dichtungseigenschaften sowie eines gefälligen Erscheinungsbildes dient, besteht der Zweck des inneren Profils in der Bereitstellung elastischer Eigenschaften sowie einer hinreichenden Kriechfestigkeit. Das äußere, den Charakter einer Beschichtung aufweisende Profil weist eine Dicke zwischen 0,5 mm und 1,0 mm auf, wobei diese Dicke gewählt ist, um ein Verlegen des Dichtungsprofils nach Maßgabe kleiner Radien ohne Faltenbildung zu ermöglichen. Die Herstellung dieses bekannten Schlauchprofils kann beispielsweise zweistufig angelegt sein, wobei zunächst das innere, in der Wandstärke relativ dickere Profil im Wege der Extrusion hergestellt wird und wobei anschließend das zweite Profil auf das erstgenannte wiederum unter Verwendung eines Extruders aufgebracht wird.

Aus der EP 0 822 052 A1 ist ein weiteres schlauchartiges, aus zwei einander umgebenden Profilen bestehendes, für eine Verwendung bei Kraftfahrzeugen bestimmtes Dichtungselement bekannt, dessen inneres und äußeres Profil gleichermaßen aus Moosgummi bestehen können. Die Herstellung eines solchen, aus zwei Profilteilen zusammengesetzten Dichtungsprofils kann im Wege der Koextrusion erfolgen. Während das äußere Profil zur Bereitstellung von Dichtungsfunktionen bestimmt ist, dient das innere Profil zur Verbesserung der Tragfähigkeit.

Es ist vor diesem Hintergrund die Aufgabe der Erfindung, ein Dichtungsprofil der eingangs bezeichneten Art mit Hinblick auf eine einfache rationelle Fertigung, ein gutes Rückstellvermögen, eine gute Dichtungsfähigkeit und solche Oberflächeneigenschaften im Bereich der äußeren Oberflächen hin auszugestalten, welche einfache Möglichkeiten zur Aufbringung einer Beschichtung wie z.B. Gleitlack, einer Beflockung, eine Folie oder dergleichen ermöglichen. Gelöst ist diese Aufgabe bei einem gattungsgemäßen Dichtungsprofil durch die Merkmale des Kennzeichnungsteils des Anspruchs 1.

Das Schlauchprofil besteht aus zwei, ineinander angeordneten und miteinander verbindbaren Profilen. Der Grundgedanke des Erfindungsgegenstands besteht darin, die beiden Schlauchprofile mit der Maßgabe zu wählen, dass sie - über eine bloße Verbindbarkeit hinausgehend - jeweils wesentliche Eigenschaften des Dichtungsprofils wie z.B. ein ausreichendes Rückstellvermögen einerseits und Oberflächeneigenschaften im Bereich der äußeren Oberflächen anderseits erfüllen. Es geht somit zusätzlich zu einer gestaltlichen auch um eine werkstoffliche Optimierung der beiden Profile, unter Zugrundelegung rationeller Möglichkeiten zur Zusammenstellung des Dichtungsprofils und einer guten Anpassung an mechanische und thermische Eigenschaftsforderungen.

Das erfindungsgemäße Dichtungsprofil ist als ein äußerst flexibel weiterverarbeitbares Produkt anzusehen, da dessen äußere Oberflächeneigenschaften unterschiedliche Beschichtungs- und Verklebungsmöglichkeiten mit anderen Stoffen eröffnen.

Erfindungsgemäß wird somit eine Schlauchprofilkombination vorgeschlagen, wobei davon ausgegangen wird, dass die elastische Rückstellkraft des Dichtungsprofils im Wesentlichen durch das innere Schlauchprofil aufgebracht wird, wohingegen dem äußeren Schlauchprofil im Wesentlichen eine Dichtungsfunktion zukommt, da dieses aufgrund seiner weichen Beschaffenheit eine exakte Anpassung an Maßungenauigkeit und Unebenheiten im Bereich der den Dichtungsspalt definierenden Berandungsflächen ermöglicht. Die zur Aufrechterhaltung der Dichtung erforderliche Anpresskraft wird durch die während der Dichtungsphase gegebene elastische Verformung des inneren Schlauchprofils aufgebracht. Dadurch, dass das innere Schlauchprofil aus Silikon, das äußere Schlauchprofil hingegen aus Moosgummi, Weichgummi oder aus einem anderen Elastomer wie z.B. einem EPDM oder TPE hergestellt ist, können vorstehende Anforderungen in jeder Hinsicht erfüllt werden.

Auch eröffnet diese Werkstoffkombination entsprechend den Merkmalen des Anspruchs 2 eine rationelle Fertigungsmöglichkeit im Wege der an sich bekannten Koextrusion.

Die Merkmale der Ansprüche 3 und 4 sind auf alternative Möglichkeiten einer Beschichtung der äußeren Oberfläche des äußeren Schlauchprofils gerichtet. Hierbei kann es sich um eine Beflockung, um die Auftragung eines Lackes, z.B. eines Gleitlackes oder auch um eine Folie handeln, welche in einem Heißbeschichtungsverfahren aufgetragen worden ist.

Das erfindungsgemäße Dichtungsprofil kann entsprechend den Merkmalen der Ansprüche 5 und 6 wahlweise in einer ringförmigen Struktur vorliegen oder als aufgewickeltes Produkt. Insbesondere besteht bei der zum Einsatz kommenden Werkstoffkombination der beiden Schlauchprofile auch die Möglichkeit einer nachträglichen stirnseitigen Verklebung, um eine Ringstruktur herzustetlen.

Man erkennt aus den vorstehenden Ausführungen, dass in dem erfindungsgemäßen Dichtungsprofil ein äußerst flexibel einsetzbares, sämtliche mechanischen und thermischen Randbedingungen erfüllendes Produkt zur Verfügung gestellt wird, welches insbesondere in Kraftfahrzeugsektor einsetzbar ist.

Die Zeichnungsfigur zeigt den Querschnitt eines beispielhaften Dichtungsprofils 1, welches zur Abdichtung eines Spaltes zwischen relativ zueinander bewegbaren Teilen, beispielsweise der Außenberandung einer Kraftfahrzeugtür und der dieser zugekehrten Innenberandung der durch die Tür zu schließenden Öffnung dient. Das Dichtungsprofil 1 ist an einer Seite durch einen streifenartigen Klebebereich 2 gekennzeichnet, über welchen es mit der Außenberandung der Kraftfahrzeugtür oder der Innenberandung der genannten Öffnung verbindbar ist. Diese Klebetechnik als solche ist jedoch nicht Gegenstand der Erfindung und es wird hierauf im Folgenden nicht näher eingegangen werden.

Das Dichtungsprofil 1 ist schlauchartig ausgebildet und umschließt einen durchgängigen gleichförmigen Hohlraum 3. Es ist im Übrigen aus einem äußeren Schlauchprofil 4 und einem inneren Schlauchprofil 5 zusammengesetzt, welche Schlauchprofile werkstofflich und mit Hinblick auf ihre Funktionen im Rahmen des Dichtungsprofils unterschiedlich ausgestaltet sind.

Das innere Schlauchprofil 5 besteht erfindungsgemäß aus Silikon. Es ist mit der Maßgabe bemessen und eingerichtet, dass dem Dichtungsprofil 1, welches in Abhängigkeit von der relativen Lage der den abzudichtenden Spalt definierenden Berandungen Verformungen in Richtung der Pfeile 6 unterliegt, ein ausreichendes elastisches und im Zeitablauf stabiles Rückstellvermögen verliehen wird. Es erfüllt somit eine wesentliche Funktion bei der Bereitstellung der im Bereich der Dichtflächen erforderlichen Anpresskraft. Dieses Rückstellvermögen wird hauptsächlich durch das innere Schlauchprofil 5 und nur zu einem unwesentlichen Teil durch das äußere Schlauchprofil 4 bereitgestellt.

Das äußere Schlauchprofil 4 besteht demgegenüber aus einem Weichgummi, z.B. EPDM und dient aufgrund seiner mechanischen Eigenschaften der exakten Anpassung an die Berandungen des abzudichtenden Spaltes. Es besteht somit aus einen im Vergleich zu dem inneren Schlauchprofil 5 relativ weich konditioniertem Werkstoff. Es ist darüber hinaus erfindungsgemäß mit Hinblick auf seine Oberflächeneigenschaften gewählt und kann zur Gänze bzw. teilweise mit einem Gleitlack oder sonstigen Oberflächenbeschichtungen, beispielsweise mit einer Beflockung überzogen werden. Eine wesentliche weitere Eigenschaft des äußeren Schlauchprofils 4 besteht somit in dessen Eignung zur Verklebung mit üblichen, im Außenbereich bei derartigen Dichtungsprofilen eingesetzten Beschichtungen, insbesondere der Fähigkeit zur Eingehung einer stabilen, temperaturbeständigen und verschleißfesten Bindung.

Die Berandungen des abzudichtenden Spaltes sind in den Zeichnungen nicht dargestellt. In jedem Fall ist über dem Klebebereich 2 eine Verbindung zu der einen Berandung gegeben, so dass die andere Berandung dem Bereich 2 gegenüberliegend angeordnet ist und sich beispielsweise an der Stelle 7 befindet. Die Berandungen sind zur Herbeiführung einer Dichtungswirkung bzw. zur Aufhebung der Dichtungswirkung in Richtung der Pfeile 6 bewegbar.

Beide Schlauchprofile 4, 5, können vorteilhaft im Wege der Koextrusion als Endlosprofile hergestellt werden, wobei eine Verbindung zwischen beiden Profilen im Wege einer Vernetzung oder auch einer Verklebung möglich ist. In das Dichtungsprofil 1 kann somit kontinuierlich in einem Inline-Prozess hergestellt werden und ist neben einem hohen elastischen Stellvermögen durch Temperaturbeständigkeit und Oberflächeneigenschaften gekennzeichnet, welche speziell an die Bedürfnisse von im Kraftfahrzeugwesen eingesetzten Dichtungsprofilen angepasst sind.

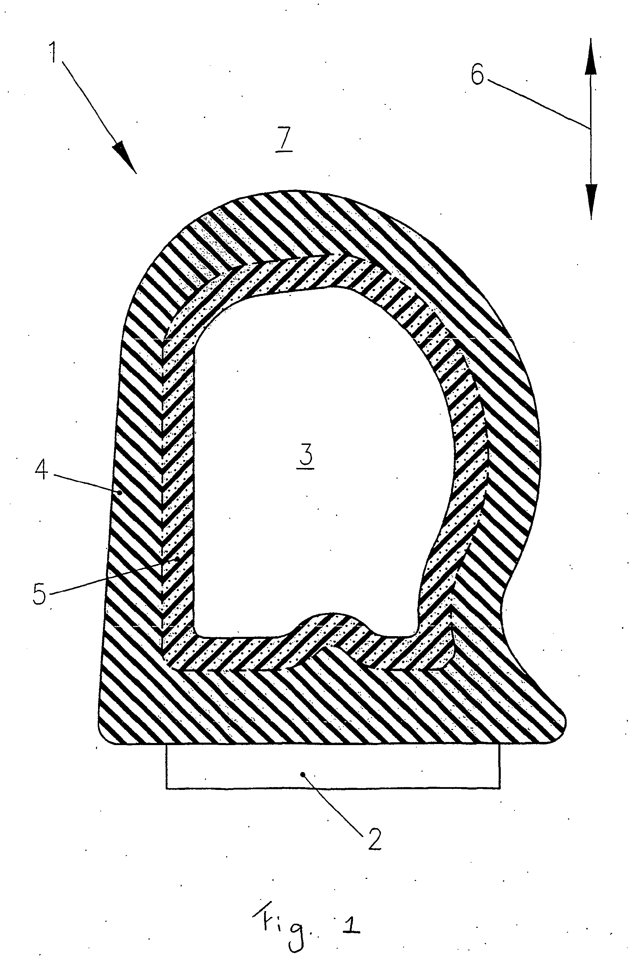

## Patentansprüche

1. Dichtungsprofil (1) zur Abdichtung eines Spaltes zwischen der äußeren Berandung eines flächigen bewegbaren ersten Teils und der inneren Berandung einer Öffnung in einem fest angeordneten zweiten Teil, die durch das erste Teil schließbar ist, beispielsweise des Spaltes zwischen einer Kraftfahrzeugtür und deren zugeordneter Öffnung eines Kraftfahrzeugaufbaus, mit einem schlauchartigen, einen Hohlraum (3) umschließenden, aus wenigstens zwei, ineinander angeordneten, miteinander Verbundenen Schlauchprofilen bestehenden Aufbau,
wobei beide Schlauchprofile werkstofflich unterschiedlich beschaffen sind,
wobei das innere Schlauchprofil (5) nach Maßgabe seiner elastischen Rückstellkraft gewählt ist und wobei das äußere Schlauchprofil (4) nach Maßgabe seiner Oberflächeneigenschaften, insbesondere seiner Beschichtbarkeit gewählt ist, dabei aus einem Moosgummi oder einem Weichgummi oder aus einem Elastomer wie z.B. einem EPDM oder einem TPE besteht, und im Vergleich zu dem inneren Schlauchprofil (5) eine weichere, eine geringere Rückstellkraft vermittelnde Beschaffenheit aufweist, **dadurch gekennzeichnet dass** das Dichtungsprofil einen streifenartigen, zur Verbindung mit einer der Berandungen bestimmten Klebebereich (2) aufweist, und dass das innere Schlauchprofil (5) aus Silikon besteht.

2. Dichtungsprofil (1) nach Anspruch 1, **dadurch gekennzeichnet, dass** beide Schlauchprofile im Wege der Koextrusion in einem Inline-Prozess zu dem Dichtungsprofil verbindbare Profile sind.

3. Dichtungsprofil nach Anspruch 1 oder 2, **gekennzeichnet durch** eine auf der Außenseite des äußeren Schlauchprofils (4) angebrachte, diese Außenfläche zumindest teilweise bedeckende Beschichtung nach Art von Gleitlack, einer Beflockung und dergleichen.

4. Dichtungsprofil (1) nach einem der Ansprüche 1 bis 3, **gekennzeichnet durch** eine mit der Außenseite des äußeren Schlauchprofils (4) verbundene, in einem Heißbeschichtungsverfahren aufgetragene, eine äußere Beschichtung bildende Folie.

5. Dichtungsprofil (1) nach einem der vorangegangenen Ansprüche 1 bis 4, **gekennzeichnet durch** eine Ausgestaltung als aufgewickeltes Profil.

6. Dichtungsprofil nach einem der vorangegangenen Ansprüche 1 bis 4, **gekennzeichnet durch** eine geschlossene ringartige Ausgestaltung.

## Claims

1. Sealing profile (1) for sealing a gap between the outer boundary of a flat, movable first part and the inner boundary of an opening in a fixedly disposed second part which can be closed by the first part, for example for sealing the gap between a motor vehicle door and its allocated opening of a motor vehicle construction, having a tube-like construction surrounding a hollow space (3) and consisting of at least two tubular profiles which are disposed one inside the other and are connected to each other,
wherein the two tubular profiles are created in different ways in terms of material, wherein the inner tubular profile (5) is chosen according to its resilient restoring force and wherein the outer tubular profile (4) is chosen according to its surface properties, in particular its ability to be coated, thus it consists of a sponge rubber or soft rubber or of an elastomer such as, for example, an EPDM or a TPE and in comparison to the inner tubular profile (5) it has a softer nature imparting a lower restoring force, **characterised in that** the sealing profile comprises a strip-like adhesive region (2) which is intended to connect to one of the boundaries, and **in that** the inner tubular profile (5) consists of silicone.

2. Sealing profile as claimed in Claim 1, **characterised in that** the two tubular profiles are profiles which can be connected to the sealing profile during coextrusion in an in-line process.

3. Sealing profile as claimed in Claim 1 or 2, **characterised by** a coating such as an anti-friction lacquer, fibre coating and the like which is applied to the exterior of the outer tubular profile (4) and at least partly covers this outer surface.

4. Sealing profile (1) as claimed in any one of Claims 1 to 3, **characterised by** a film which is connected to the exterior of the outer tubular profile (4), is applied in a hot melt coating process and forms an outer coating.

5. Sealing profile (1) as claimed in any one of the preceding Claims 1 to 4, **characterised by** a construction as a wound profile.

6. Sealing profile as claimed in any one of the preceding Claims 1 to 4, **characterised by** a closed, annular construction.

## Revendications

1. Profilé d'étanchéité (1) pour rendre étanche une fente entre la bordure extérieure d'un premier élément plan mobile et la bordure intérieure d'une ouverture ménagée dans un second élément fixe et qui peut être obturée par le premier élément, par exemple la fente entre une porte de véhicule automobile et son ouverture associée ménagée dans la carrosserie du véhicule automobile, présentant une construction ayant la forme d'un tuyau flexible qui entoure une cavité (3) et est composé au moins de deux profilés flexibles reliés entre eux et disposés l'un dans l'autre,
dans lequel les deux profilés flexibles sont créés avec des matières différentes, le profilé flexible intérieur (5) étant choisi en fonction de sa force de rappel élastique et le profilé flexible extérieur (4) étant choisi en fonction de ses caractéristiques de surface, en particulier de sa capacité de recouvrement, se composant d'un caoutchouc mousse ou d'un caoutchouc mou ou d'un élastomère comme par exemple un EPDM ou un TPE, et présentant, par rapport au profilé flexible intérieur (5) une qualité plus molle transmettant une force de rappel plus faible,
**caractérisé en ce que** le profilé d'étanchéité présente une zone d'adhésion (2) en forme de bande définie pour relier une des bordures et **en ce que** le profilé flexible intérieur (5) se compose de silicone.

2. Profilé d'étanchéité (1) selon la revendication 1,
**caractérisé en ce que** les deux profilés flexibles sont des profilés pouvant être reliés en un profilé d'étanchéité au cours de la coextrusion dans un processus en ligne.

3. Profilé d'étanchéité (1) selon la revendication 1 ou 2,
**caractérisé par** un revêtement de type vernis de glissement, un floculant et similaire appliqué sur la surface extérieure du profilé flexible extérieur (4) et qui recouvre au moins partiellement cette surface extérieure.

4. Profilé d'étanchéité (1) selon l'une des revendications 1 à 3,
**caractérisé par** une feuille formant un revêtement extérieur qui est reliée à la face extérieure du profilé flexible extérieur (4) et appliquée au cours d'un procédé de revêtement à chaud.

5. Profilé d'étanchéité (1) selon l'une des revendications précédentes 1 à 4,
**caractérisé par** une réalisation sous la forme d'un profilé enroulé.

6. Profilé d'étanchéité (1) selon l'une des revendications précédentes 1 à 4,
**caractérisé par** une réalisation fermée en forme de boucle.
